# DEMANDE DE BREVET EUROPEEN

(11) **EP 1 983 227 A1**
(43) Date de publication de la demande: **22.10.2008**
(21) Numéro de dépôt: 07300956.5
(22) Date de dépôt: 17.04.2007
(51) Int. Cl.: F16H 61/04, F16H 3/12, F16H 3/089

(54) **Boîte de vitesses de véhicule automobile et procédé de changement de rapport pour une telle boîte de vitesses**

(71) Demandeur: PEUGEOT CITROËN AUTOMOBILES S.A., 78140 Vélizy Villacoublay (FR)
(72) Inventeur: Wascheul, Michael, 78260 Acheres (FR)

(57) **Abrégé**

L'invention concerne une boîte de vitesses de véhicule automobile comprenant un arbre primaire (2), un arbre secondaire (4), une couronne intermédiaire (6) liée en rotation à l'arbre secondaire (4), un troisième arbre (8) lié en rotation à la couronne intermédiaire (6), un pignon de marche arrière (10) monté fou autour du troisième arbre (8), une pluralité de paires de pignons (14,16) accouplant sélectivement en rotation les arbres primaire et secondaire (2,4) et un pignon intermédiaire (12) monté fou autour de l'arbre secondaire (4) et engrenant à la fois l'arbre primaire (2) et le pignon de marche arrière (10).

Selon l'invention, la boite de vitesses comprend un premier synchroniseur (18) apte à synchroniser sélectivement en rotation le pignon de marche arrière (10) et le troisième arbre (8) en cas d'ordre de passage à un rapport de démultiplication plus élevé jusqu'à ce que le rapport de démultiplication plus élevé soit atteint.

## Description

L'invention concerne en général une boîte de vitesses de véhicule automobile et un procédé de changement de rapport pour une telle boîte de vitesses.

Plus précisément, l'invention concerne, selon un premier aspect, une boîte de vitesses de véhicule automobile comprenant un arbre primaire propre à être entraîné en rotation par un moteur, un arbre secondaire propre à entraîner les roues du véhicule, une couronne intermédiaire liée en rotation à l'arbre secondaire, un troisième arbre lié en rotation à la couronne intermédiaire, un pignon de marche arrière monté fou autour du troisième arbre, une pluralité de paires de pignons accouplant sélectivement en rotation les arbres primaire et secondaire et définissant un rapport de démultiplication entre la vitesse de rotation de l'arbre primaire et celle de l'arbre secondaire propre à chaque paire, et un pignon intermédiaire monté fou autour de l'arbre secondaire et engrenant à la fois l'arbre primaire et le pignon de marche arrière, la boîte comprenant encore un organe de commande du passage d'un rapport de démultiplication à un autre.

Les boîtes de vitesses de ce type sont connues de l'état de la technique, et comprennent typiquement un synchroniseur pour chaque paire de pignons de la boîte de vitesses. Chaque paire de pignons comprend en effet un pignon monté fou autour de l'arbre primaire ou de l'arbre secondaire, le synchroniseur étant apte à synchroniser la vitesse de rotation du pignon fou avec celle de l'arbre quand le conducteur souhaite engager le rapport correspondant à ladite paire de pignons, en vue de solidariser en rotation le pignon fou et l'arbre.

Une telle boîte de vitesses comprend donc, alignées le long des arbres primaire et secondaire, six paires de pignons dans le cas d'une boîte à six rapports de marche avant et trois synchroniseurs doubles. Elle présente donc une longueur importante, ce qui la rend difficile à implanter dans le compartiment moteur du véhicule automobile.

Dans ce contexte, la présente invention a pour but de proposer une boîte de vitesses à la fois plus compacte que les boîtes de l'état de la technique.

A cette fin, la boîte de vitesses de l'invention, du type décrit ci-dessus, est essentiellement caractérisée en ce qu'elle comprend un premier synchroniseur apte à synchroniser sélectivement en rotation le pignon de marche arrière et le troisième arbre, un capteur de mesure d'une grandeur représentative de la vitesse de rotation de l'arbre primaire, une entrée d'un paramètre représentatif de la vitesse de rotation de l'arbre secondaire et des moyens de pilotage de la boîte de vitesses renseignés par le capteur de vitesse et par l'entrée du paramètre représentatif et recevant des ordres de l'organe de commande du passage de rapport, les moyens de pilotage étant aptes à commander, en cas d'ordre de passage à un rapport de démultiplication plus élevé, la synchronisation du pignon de marche arrière avec le troisième arbre, jusqu'à ce que le capteur indique que le rapport de démultiplication plus élevé est atteint.

Dans un mode de réalisation possible de l'invention, la boîte de vitesses comprend un second synchroniseur apte à synchroniser sélectivement avec l'arbre secondaire un pignon, appartenant à une première paire, monté fou autour de l'arbre secondaire, les moyens de pilotage étant aptes à commander, en cas d'ordre de passage à un rapport de démultiplication moins élevé, la synchronisation dudit pignon fou avec l'arbre secondaire jusqu'à ce que le capteur indique que le rapport de démultiplication moins élevé est atteint.

Dans ce cas, le rapport de démultiplication de la première paire est le rapport le plus bas de la boîte de vitesses.

On notera ici qu'avantageusement le second synchroniseur est un synchroniseur double apte à synchroniser un autre pignon monté fou autour de l'arbre secondaire et appartenant à une seconde paire.

En outre, au moins une paire autre que les première et seconde paires comprend un pignon sélectivement lié à l'arbre primaire ou à l'arbre secondaire par un dispositif de crabotage dépourvu de moyens de synchronisation.

Plus précisément, les paires autres que les première et seconde paires comprennent chacune un pignon sélectivement lié à l'arbre primaire ou à l'arbre secondaire par un dispositif de crabotage dépourvu de moyen de synchronisation.

Suivant une autre caractéristique de invention, le pignon intermédiaire est le pignon fou de la première paire.

On précisera encore ici le capteur est adapté pour mesurer la vitesse de rotation du pignon de marche arrière.

En outre, la couronne intermédiaire est une couronne de pont entraînant en rotation les roues du véhicule.

Selon un second aspect, l'invention concerne un procédé de changement de rapport de démultiplication pour une boîte de vitesses présentant les caractéristiques ci-dessus, caractérisé en ce qu'il comprend les étapes suivantes, en cas de passage d'un rapport relativement moins élevé à un rapport relativement plus élevé :
1/ désaccouplement des arbres primaire et secondaire ;
2/ synchronisation du pignon de marche arrière avec le troisième arbre pour ralentir l'arbre primaire jusqu'à ce que le rapport de démultiplication plus élevé soit atteint ;
3/ accouplement des arbres primaire et secondaire de la paire de pignons correspondant au rapport de démultiplication plus élevé.

En outre, il comprend les étapes suivantes en cas de passage d'un rapport relativement plus élevé à un rapport relativement moins élevé:
1/ désaccouplement des arbres primaire et secondaire;
2/ synchronisation du pignon fou de la première paire avec l'arbre secondaire pour accélérer l'arbre primaire jusqu'à ce que le rapport de démultiplication moins élevé soit atteint;

31 accouplement des arbres primaire et secondaire par l'intermédiaire de la seconde paire de pignons correspondant au rapport de démultiplication moins élevé.

Selon un troisième aspect, l'invention concerne un véhicule comprenant une boîte de vitesses présentant les caractéristiques ci-dessus, et un capteur de vitesse longitudinale du véhicule relié à l'entrée du paramètre représentatif de la vitesse de rotation de l'arbre secondaire de la boîte de vitesses et un organe de commande.

D'autres caractéristiques et avantages de l'invention ressortiront de la description qui est en est faite ci-dessous, à titre indicatif et nullement limitatif, en référence aux figures annexées parmi lesquelles :
- la figure 1 est une vue développée en coupe de la boîte de vitesses de l'invention ; et
- la figure 2 est une représentation schématique de la position des arbres et de la couronne de pont de la boîte de vitesses de la figure 1, dans un plan perpendiculaire à ces arbres.

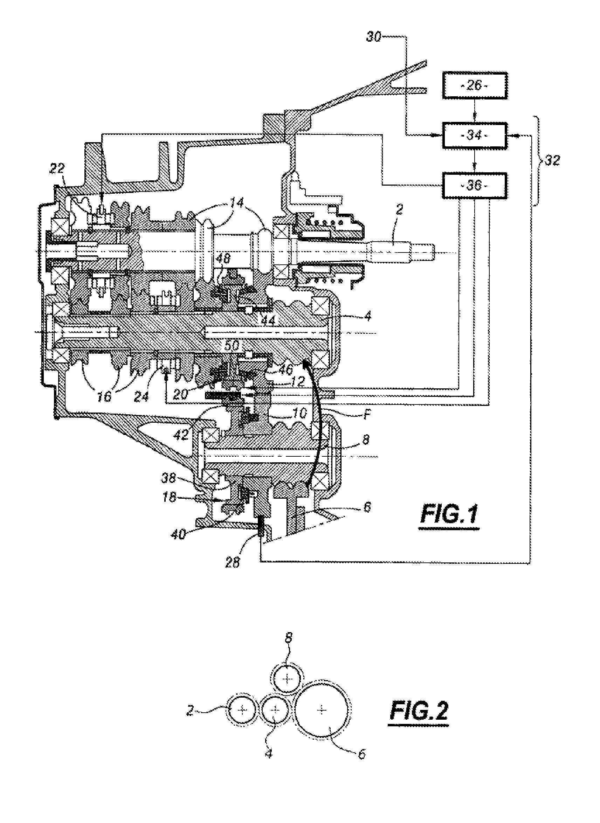

La boîte de vitesses représentée sur la figure 1 est destinée à être utilisée dans un véhicule automobile comprenant un moteur, un arbre moteur entraîné en rotation par le moteur, un embrayage solidarisant sélectivement en rotation l'arbre moteur et un arbre primaire 2 de la boîte de vitesses, et un différentiel entraîné en rotation par un arbre secondaire 4 de la boîte de vitesses et entraînant lui-même en rotation les roues du véhicule.

L'embrayage est susceptible d'adopter des positions ouverte ou fermée.

En position ouverte de l'embrayage, l'arbre primaire 2 est libre en rotation par rapport à l'arbre moteur. En position fermée de l'embrayage, l'arbre primaire 2 est solidaire en rotation de l'arbre moteur. Dans toutes ces positions, l'arbre secondaire 4 est solidaire de la transmission et donc des roues.

Comme on le voit sur la figure 1, la boîte de vitesses comprend, outre les arbres primaire 2 et secondaire 4, une couronne intermédiaire 6 liée en rotation à l'arbre secondaire 4, un troisième arbre 8 lié en rotation à la couronne intermédiaire 6, un pignon de marche arrière 10 monté fou autour du troisième arbre 8, une pluralité de paires de pignons accouplant sélectivement en rotation les arbres primaire 2 et secondaire 4 et définissant un rapport de démultiplication entre la vitesse de rotation de l'arbre primaire 2 et celle de l'arbre secondaire 4 propre à chaque paire, et un pignon intermédiaire 12 monté fou autour de l'arbre secondaire 4 et engrenant à la fois l'arbre primaire 2 et le pignon de marche arrière 10.

La couronne intermédiaire 6 est ici la couronne de pont, l'arbre secondaire 4 entraînant le différentiel par l'intermédiaire de cette couronne de pont 6, comme indiqué par la flèche F de la figure 1. Le troisième arbre 8 est en effet disposé au-dessus du plan contenant les arbres primaire 2 et secondaire 4, comme le montre la figure 2, de telle sorte que l'arbre secondaire 4, le troisième arbre 8 et la couronne de pont 6 occupent les trois sommets d'un triangle.

La boîte comprend six rapports de démultiplication de marche avant différents, et un rapport de démultiplication de marche amère.

A cet effet, la boîte de vitesses comprend six paires de pignons correspondant aux six rapports de démultiplication de marche avant. Un rapport de démultiplication est défini comme étant le rapport de la vitesse de rotation de l'arbre secondaire 4 divisé par la vitesse de rotation de l'arbre primaire 2 quand la paire de pignons correspondant au rapport accouple en rotation les arbres primaire 2 et secondaire 4.

On appelle rapport de première le rapport de démultiplication le plus bas, rapport de seconde le rapport de démultiplication immédiatement supérieur, et ainsi de suite jusqu'au rapport de sixième, qui est le rapport de démultiplication le plus élevé.

Chaque paire de pignons comprend un pignon menant 14 solidaire en rotation de l'arbre primaire 2 ou monté fou autour de cet arbre primaire 2, et un pignon mené 16 solidaire en rotation de l'arbre secondaire 4 ou monté fou autour de l'arbre secondaire 4. Les pignons menant 14 et mené 16 d'une même paire engrènent en permanence l'un avec l'autre.

Les pignons menants 14 sont alignés le long de l'arbre primaire 2, le pignon menant 14 du rapport de première, c'est-à-dire du rapport de démultiplication le plus faible, étant situé le plus à droite sur la figure 1, le pignon menant 14 du rapport de seconde, c'est-à-dire du rapport de démultiplication immédiatement supérieur au rapport de première, étant situé à la gauche du pignon menant 14 du rapport de première, et ainsi de suite. Le pignon menant 14 du rapport de sixième, c'est-à-dire du rapport de démultiplication le plus élevé, est situé à l'extrême gauche de l'arbre primaire 2 sur la figure 1.

Les pignons menants 14 des quatre premiers rapports sont solidaires en rotation de l'arbre primaire 2. Les pignons menants 14 des rapports de cinquième et sixième sont montés fous autour de l'arbre primaire 2.

De manière symétrique, les pignons menés 16 sont alignés le long de l'arbre secondaire 4. Le pignon mené 16 du rapport de première est situé à droite de l'arbre secondaire 4, le pignon mené 16 du rapport de seconde est situé immédiatement à gauche du pignon mené 16 du rapport de première, et ainsi de suite. Le pignon mené 16 du rapport de sixième est situé à l'extrême gauche de l'arbre secondaire 4 sur la figure 1. Les pignons menés 16 des quatre premiers rapports sont montés fous autour de l'arbre secondaire 4, les pignons menés 16 des rapports de cinquième et sixième étant solidaires en rotation de l'arbre secondaire 4.

Le pignon mené 16 du premier rapport joue ici le rôle de pignon intermédiaire 12.

Les pignons menants 14 sont de tailles croissantes de la droite vers la gauche de l'arbre primaire, le pignon menant 14 du rapport de première étant de diamètre inférieur au pignon menant 14 du rapport de seconde, le pignon menant 14 du rapport de seconde étant de taille inférieure au pignon menant 14 du rapport de troisième et ainsi de suite.

Inversement, les pignons menés 16 sont de tailles décroissantes de la droite vers la gauche de l'arbre secondaire 4. Ainsi, le pignon mené 16 du rapport de première est de taille supérieure au pignon mené 16 du rapport de seconde, le pignon mené 16 du rapport de seconde est de taille supérieure au pignon mené 16 du rapport de troisième et ainsi de suite.

Pour une vitesse de rotation donnée de l'arbre primaire 2, la vitesse de rotation du pignon mené 16 décroît avec le rapport engagé, la vitesse de rotation du pignon mené 16 étant très rapide si le rapport de première est engagé, un peu moins rapide si le rapport de seconde est engagé, encore un peu moins rapide si le rapport de troisième est engagé et ainsi de suite.

La boîte de vitesses comprend un premier synchroniseur 18 apte à synchroniser sélectivement en rotation le pignon de marche arrière 10 et le troisième arbre 8, puis, une fois que le pignon 10 et l'arbre 8 tournent à la même vitesse de rotation, apte à solidariser en rotation le pignon de marche arrière 10 et le troisième arbre 8 par crabotage.

Le premier synchroniseur 18 comprend un pignon moteur 38 solidaire en rotation du troisième arbre 8, une bague de synchronisation 40 entraînée en rotation par le pignon moteur 38 et mobile axialement le long du troisième arbre 8 entre une position neutre et une position de synchronisation, et un manchon de crabotage 42 entraîné en rotation par le pignon moteur 38 et mobile axialement le long du troisième arbre 8.

Le manchon de crabotage 42 est susceptible d'être déplacé en translation axiale vers le pignon de marche 10 arrière entre une position neutre dans laquelle le pignon de marche arrière 10 est libre en rotation par rapport au troisième arbre 8, une position de synchronisation dans laquelle le manchon 42 sollicite la bague de synchronisation 40 vers le pignon de marche arrière 10 de façon à ce qu'une portée de friction de la bague 40 frotte contre une zone de friction complémentaire du pignon 10, et une position de cabotage dans laquelle le manchon 42 solidarise en rotation le pignon de marche arrière 10 et le troisième arbre 8.

Le frottement entre la bague de synchronisation 40 et le pignon de marche arrière 10 a pour effet de réduire la vitesse de rotation du pignon 10.

Le manchon 42 n'est susceptible d'adopter sa position de crabotage que quand les vitesses de rotation du troisième arbre 8 et du pignon de marche arrière 10 sont pratiquement égales.

La position neutre est la position la plus à gauche sur la figure 1, la position de crabotage est la position la plus à droite sur la figure 1, et la position de synchronisation est intermédiaire entre les positions neutre et de crabotage.

La boîte de vitesses comprend encore un second synchroniseur 20 apte à synchroniser sélectivement en rotation avec l'arbre secondaire 4 un pignon mené 16 appartenant à une première paire de pignons et monté fou autour de l'arbre secondaire 4. Le second synchroniseur 20, une fois le pignon 16 et l'arbre secondaire 4 synchronisés à la même vitesse de rotation, est apte à solidariser en rotation le pignon mené 16 et l'arbre secondaire 4 par crabotage.

Le pignon mené 16 susceptible d'être synchronisé par le second synchroniseur 20 est celui de la paire de pignons correspondant au rapport de démultiplication de première de la boîte, c'est-à-dire au rapport de démultiplication le plus bas.

Comme on le voit sur la figure 1, le second synchroniseur 20 est un synchroniseur double interposé entre les pignons menés 16 des paires correspondant aux rapports de première et de seconde de la boîte de vitesses, ce synchroniseur permettant également de synchroniser avec l'arbre secondaire 4 le pignon mené 16 de la paire correspondant au rapport de démultiplication de seconde.

Le second synchroniseur 20 comprend un pignon moteur 44, deux bagues de synchronisation 46 et 48 et un manchon 50 susceptible d'être déplacé axialement le long de l'arbre secondaire 4, à partir d'une position neutre, vers le pignon mené 16 du premier rapport ou vers le pignon mené 16 du second rapport. En position neutre, les pignons menés 16 des premier et second rapports sont libres en rotation par rapport à l'arbre secondaire 4. Quand le manchon 50 est déplacé vers l'un des pignons menés 16, il adopte d'abord une position de synchronisation 46 ou 48 dans laquelle une des bagues de synchronisation frotte contre ledit pignon mené 16, puis une position de crabotage dans laquelle le manchon solidarise en rotation le pignon mené 16 et l'arbre secondaire 4 quand la vitesse de rotation du pignon mené 16 est pratiquement égale à celle de l'arbre secondaire 4.

La boite de vitesses comprend encore un premier dispositif de crabotage 22 dépourvu de moyens de synchronisation, disposé entre les pignons menants 14 des rapports de démultiplication de cinquième et sixième, et apte à solidariser en rotation avec l'arbre primaire 2, par crabotage, soit le pignon menant 14 du cinquième rapport de démultiplication soit le pignon menant 14 du sixième rapport de démultiplication, Le dispositif de crabotage 22 comprend un pignon moteur solidaire de l'arbre primaire 2 et un manchon de crabotage solidaire en rotation du pignon moteur et mobile axialement le long de l'arbre primaire 2 vers le pignon menant 14 du cinquième rapport ou celui du sixième rapport. Il est dépourvu de bague de synchronisation. Le manchon est susceptible d'adopter une position neutre, une position de crabotage du pignon menant 14 du cinquième rapport par déplacement vers ce pignon, et une position de crabotage du pignon menant 14 du sixième rapport par déplacement vers ce pignon. En position neutre du manchon, ni le pignon menant 14 du cinquième rapport de démultiplication ni le pignon menant 14 du sixième rapport de démultiplication n'est solidaire en rotation de l'arbre primaire 2, ces pignons tournant alors fous autour de l'arbre primaire 2. En position de crabotage, le pignon menant 14 est solidaire de l'arbre primaire 2 en rotation. On notera que le manchon n'est susceptible de passer de sa position neutre à sa position de crabotage d'un pignon que si les vitesses de rotation de l'arbre primaire et du pignon à craboter sont pratiquement égales.

La boîte de vitesses comprend encore un second dispositif de crabotage 24 interposé entre les pignons menés 16 des troisième et quatrième rapports de démultiplication. Ce second dispositif de crabotage 24 est apte à solidariser en rotation avec Marbre secondaire 4 par crabotage soit le pignon mené 16 du rapport de troisième soit le pignon mené 16 du rapport de démultiplication de quatrième. Le second dispositif de crabotage 24 présente également une position intermédiaire dans laquelle aucun des deux pignons menés 16 n'est solidaire en rotation de l'arbre secondaire 4, ces pignons menés 16 tournant fous autour de cet arbre, Il est du même type que le premier dispositif de crabotage 22.

Les premier et second synchroniseurs 18 et 20 et les premier et second dispositifs de crabotage 22 et 24 sont de type connu et ne seront donc pas décrits plus dans le détail ici.

La boîte de vitesses est de type robotisé et comprend un organe de commande 26 du passage d'un rapport de démultiplication à un autre, susceptible d'être actionné par le conducteur du véhicule automobile, un capteur 28 de mesure d'une grandeur représentative de la vitesse de rotation de l'arbre primaire 2, une entrée 30 d'un paramètre représentatif de la vitesse de rotation de l'arbre secondaire 4, et des moyens 32 de pilotage de la boîte de vitesses.

Plus précisément, le capteur 28 est appliqué sur le pignon 10 et est propre à mesurer la vitesse de rotation du pignon de marche arrière 10, cette vitesse étant directement liée à la vitesse de rotation de l'arbre primaire 2 du fait que le pignon de marche arrière 10 est entraîné en rotation en permanence par l'arbre primaire 2 par l'intermédiaire du pignon intermédiaire 12.

Le paramètre représentatif de la vitesse de rotation de l'arbre secondaire 4 est la vitesse longitudinale du véhicule, la vitesse de rotation de l'arbre secondaire 4 étant directement liée à cette vitesse longitudinale, du fait que l'arbre secondaire 4 est lié en rotation en permanence aux roues du véhicule. Le véhicule comporte un capteur de vitesse 28 qui est relié à l'entrée 30.

Les moyens de pilotage 32 comprennent un calculateur 34 et des actionneurs 36 des premier et second synchroniseurs 18 et 20 et des premier et second dispositifs de crabotage 22 et 24.

Le calculateur 34 reçoit les ordres de l'organe de commande 26, et est renseigné par le capteur de vitesse 28 et par l'entrée du paramètre représentatif 30. Le calculateur 34 pilote les différents actionneurs 36. Les actionneurs 36 sont aptes à déplacer les manchons de crabotage des premier et second synchroniseurs 18 et 20 et des premier et second dispositifs de crabotage 22 et 24, dans un sens ou dans l'autre le long des arbres primaire et secondaire 2 et 4 et le long du troisième arbre 8.

Le calculateur 34 est en outre apte à commander l'ouverture et la fermeture de l'embrayage quand il reçoit de l'organe de commande 26 un ordre de passage de rapport.

On va maintenant décrire le fonctionnement de la boîte de vitesses.

Dans le cas où le conducteur du véhicule actionne l'organe de commande 26 en demandant le passage d'un premier rapport relativement moins élevé à un second rapport relativement pus élevé, le calculateur 34 commande d'abord l'ouverture de l'embrayage, puis le désaccouplement des arbres primaire et secondaire 2 et 4 en décrabotant le pignon fou de la paire du rapport moins élevé.

Il actionne pour cela l'actionneur 36 correspondant soit au premier dispositif de crabotage 22, au second dispositif de crabotage 24 soit au second synchroniseur 20.

Le calculateur 34 commande ensuite l'actionnement du premier synchroniseur 18, par déplacement du manchon en position de synchronisation, de façon à créer une friction entre le pignon de marche arrière 10 et la bague liée au troisième arbre 8, ce qui a pour effet de ralentir la vitesse de rotation de l'arbre primaire 2.

En effet, la vitesse de rotation du troisième arbre 8 est sensiblement constante puisque ce troisième arbre 8 est lié en rotation à la couronne de pont 6 elle-même liée en rotation aux roues du véhicule, Dans le court lapse de temps nécessaire pour effectuer le changement de rapport, la vitesse du véhicule est sensiblement constante, de telle sorte que la vitesse de rotation du troisième arbre 8 est également sensiblement constante.

Le pignon de marche arrière 10 est quant à lui lié en permanence en rotation à l'arbre primaire 2 par l'intermédiaire du pignon de première 12, de telle sorte que le frottement généré par l'actionnement du premier synchroniseur 18 a pour effet de ralentir la rotation du pignon de marche arrière 10 et donc de ralentir la vitesse de rotation de l'arbre primaire 2.

On soulignera ici que le freinage obtenu en actionnant le premier synchroniseur 18 est particulièrement efficace du fait que le pignon de marche arrière 10 et le troisième arbre 8 sont entraînés en rotation en sens inverse. En effet, le pignon de marche arrière 10 tourne toujours dans le même sens que l'arbre primaire 2. En revanche, le troisième arbre 8 tourne en sens inverse de l'arbre primaire 2 quand un rapport de marche avant est engagé, puisque le troisième arbre 8 est lié en rotation à l'arbre primaire 2 à travers successivement le pignon mené 16 du rapport engagé lui-même solidaire en rotation de l'arbre secondaire 4 et la couronne de pont 6 qui engrène à la fois l'arbre secondaire 4 et le troisième arbre 8.

Le calculateur 34 scrute en permanence les vitesses de rotation des arbres primaire 2 et secondaire 4. Quand le rapport entre ces deux vitesses de rotation baisse jusqu'à la valeur du rapport de démultiplication à engager, du fait du ralentissement de l'arbre primaire 2, le calculateur 34 commande l'arrêt de la synchronisation du pignon de marche arrière 10 avec le troisième arbre 8. L'actionneur 36 ramène le manchon de crabotage de sa position de synchronisation à sa position neutre. Le ralentissement de l'arbre primaire 2 cesse alors.

Le calculateur 34 commande ensuite l'engagement du rapport de démultiplication plus élevé recherché, en crabotant le pignon fou de la paire correspondante avec l'arbre primaire 2 ou l'arbre secondaire 4. Pour ce faire, il actionne l'actionneur 36 correspondant. Le crabotage du pignon fou avec l'arbre primaire 2 ou secondaire 4 peut être réalisé du fait que les arbres primaire 2 et secondaire 4 sont synchronisés aux vitesses de rotation permettant de réaliser cette opération.

Le calculateur 34 commande enfin la fermeture de l'embrayage, ce qui a pour effet d'accoupler l'arbre moteur et l'arbre primaire 2.

On notera que la procédure décrite ci-dessus est applicable au cas d'un passage de rapport montant, c'est-à-dire au cas d'un passage d'un rapport relativement moins élevé à un rapport de démultiplication relativement plus élevé, de seconde en troisième, de troisième en quatrième, de quatrième en cinquième et de cinquième en sixième. Elle n'est pas applicable au cas du passage du premier rapport au second rapport, du fait que le second synchroniseur 20 permet de synchroniser directement le pignon mené 16 du rapport de seconde avec l'arbre secondaire 4.

Dans le cas d'un passage du premier au second rapport, la procédure consiste à désaccoupler les arbres primaire 2 et secondaire 4 en décrabotant le pignon mené 16 du premier rapport de l'arbre secondaire 4 par déplacement du manchon du second synchroniseur 20 en position neutre, puis à utiliser ce même second synchroniseur 20 pour synchroniser le pignon mené 16 du rapport de seconde avec l'arbre secondaire 4.

En revanche, le premier synchroniseur 18 est utilisé lors du passage du point mort de la boîte de vitesses en marche arrière.

Dans ce cas, la procédure consiste à ouvrir l'embrayage, à synchroniser le pignon de marche arrière 10 avec le troisième arbre 8 à l'aide du premier synchroniseur 18, à craboter le pignon de marche arrière 10, puis à fermer l'embrayage.

Dans le cas d'un passage de rapport descendant, c'est-à-dire d'un rapport relativement plus élevé à un rapport de démultiplication relativement moins élevé, le calculateur 34 commande d'abord l'ouverture de l'embrayage. Il commande ensuite le désaccouplement des arbres primaire 2 et secondaire 4 en décrabotant le pignon fou de la paire correspondant au rapport le plus élevé. A cet effet, le calculateur 34 actionne l'actionneur 36 correspondant au premier ou au second dispositif de crabotage ou au second synchroniseur, en fonction du rapport engagé.

Le calculateur 34 commande ensuite l'actionnement du second synchroniseur 20, ce qui a pour effet de déplacer le manchon du synchronisme en position de synchronisation et de créer une friction entre une bague de synchronisation du second synchroniseur 20 liée en rotation à l'arbre secondaire 4 et la surface de friction complémentaire ménagée sur le pignon mené 16 du rapport de première.

Cette friction a pour effet d'accélérer progressivement la vitesse de rotation du pignon mené 16 du rapport de première et, du même coup, d'accélérer la vitesse de rotation de l'arbre primaire 2 qui engrène en permanence le pignon mené 16 du rapport de première. En effet, quand un autre rapport est engagé, le pignon mené 16 du rapport de première tourne toujours moins vite que l'arbre secondaire 4. La friction créée par l'actionnement du second synchroniseur 20 a donc nécessairement pour effet d'accélérer la rotation du pignon mené 16 du rapport de première et de l'arbre primaire 2.

Les moyens de calcul 34 scrutent en permanence les vitesses de rotation des arbres primaire 2 et secondaire 4, et quand le rapport de ces vitesses a atteint le niveau correspondant au rapport de démultiplication moins élevé recherché, du fait de l'accélération de la vitesse de rotation de l'arbre primaire 2, le calculateur 34 commande que l'actionnement du second synchroniseur 20 soit arrêté. L'actionneur 36 correspondant ramène le manchon du second synchroniseur 20 à sa position neutre.

Le calculateur 34 commande alors le crabotage du pignon fou de la paire correspondant au rapport de démultiplication 6 moins élevé, de façon à accoupler de nouveau les arbres primaire 2 et secondaire 4.

Enfin, le calculateur 34 commande la fermeture de l'embrayage de façon à lier en rotation l'arbre moteur et l'arbre primaire 2 de la boîte de vitesses.

Cette procédure est utilisée pour tous les passages de rapports descendants, c'est-à-dire les passages de sixième en cinquième, de cinquième en quatrième, de quatrième en troisième, de troisième en seconde, et de seconde en première.

On notera que le second synchroniseur 20 est utilisé pour le passage du point mort au rapport de première, et pour le passage du rapport de première au rapport de seconde.

La boîte de vitesses décrite ci-dessus peut présenter de multiples variantes sans sortir du cadre de l'invention.

Le pignon intermédiaire 12 liant en rotation l'arbre primaire 2 et le pignon de marche arrière 10 peut ne pas être le pignon mené 16 de première. Ce pignon intermédiaire 12 peut être un autre pignon mené 16 monté fou autour de l'arbre secondaire 4, tel que le pignon mené 16 du rapport de troisième ou le pignon mené du rapport de quatrième,

La boîte de vitesses peut comprendre moins de six paires de pignons de marche avant, par exemple quatre ou cinq paires de pignons de marche avant, ou plus de six paires de pignons de marche avant, par exemple sept.

La couronne intermédiaire liant en rotation l'arbre secondaire 4 et le troisième arbre 8 peut ne pas être la couronne de pont 6. Cette couronne intermédiaire peut être par exemple une couronne montée folle autour de l'arbre primaire 2, ou une couronne montée folle autour d'un quatrième arbre de la boîte de vitesses.

Le second synchroniseur 20, en cas de passage de rapport descendant, peut synchroniser le pignon mené 16 du rapport de seconde avec l'arbre secondaire 4, en lieu et place du pignon du rapport de première. Toutefois, cette variante de réalisation n'est pas préférée, car le pignon mené 16 du rapport de seconde tourne moins vite que le pignon mené du rapport de première pour une vitesse de rotation donnée de l'arbre primaire 2. L'accélération de l'arbre primaire 2 est donc moins rapide dans ce cas.

On comprend bien que la boîte de vitesses décrite ci-dessus présente de multiples avantages.

L'encombrement axial de la boîte de vitesses, c'est-à-dire son encombrement suivant une direction parallèle à l'arbre primaire 2 est réduit. En effet, cet encombrement est déterminé, entre autres, par l'empilement des cotes nécessaires pour loger les premier et second dispositifs de crabotage et le second synchroniseur. Or, l'encombrement axial d'un dispositif de crabotage dépourvu de moyens de synchronisation est nettement plus court que l'encombrement axial d'un synchroniseur. De ce fait, l'encombrement axial de la boîte de vitesses selon l'invention et réduit par rapport à l'encombrement axial d'une boîte de vitesses comprenant trois synchroniseurs doubles associés aux six paires de pignons de marche avant.

De plus, le coût de la boîte de vitesses décrite ci-dessus est réduit, du fait qu'elle comprend deux dispositifs de crabotage double en lieu et place de deux synchroniseurs double. En effet, le coût d'un dispositif de crabotage est nettement inférieur au coût d'un synchroniseur.

On peut souligner également que cette boîte de vitesses ne comprend qu'un seul capteur, ce qui est favorable d'un point de vue coût et d'un point de vue fiabilité.

Par ailleurs, la boîte de l'invention présente l'avantage que le ralentissement de la vitesse de rotation de l'arbre primaire 2 est très rapide en cas de passage de rapport montant. En effet, ce ralentissement est obtenu en synchronisant le pignon de marche arrière 10 avec le troisième arbre 8, ce qui produit un couple de ralentissement particulièrement élevé du fait que le pignon et l'arbre tournent en sens inverse quand un rapport de marche avant est engagé.

Enfin, on peut souligner que la boîte décrite ci-dessus présente l'avantage de disposer d'un synchroniseur pour le pignon de marche arrière 10. Il est donc possible d'engager le rapport de marcher arrière, sans produire de craquements, même si le véhicule automobile se déplace à faible vitesse vers l'avant.

## Revendications

1. Boîte de vitesses de véhicule automobile comprenant un arbre primaire (2) propre à être entraîné en rotation par un moteur, un arbre secondaire (4) propre à entrainer les roues du véhicule, une couronne intermédiaire (6) liée en rotation à l'arbre secondaire (4), un troisième arbre (8) lié en rotation à la couronne intermédiaire (6), un pignon de marche arrière (10) monté fou autour du troisième arbre (8), une pluralité de paires de pignons (14, 16) accouplant sélectivement en rotation les arbres primaire et secondaire (2, 4) et définissant un rapport de démultiplication entre la vitesse de rotation de l'arbre primaire (2) et celle de l'arbre secondaire (4) propre à chaque paire, et un pignon intermédiaire (12) monté fou autour de l'arbre secondaire (4) et engrenant à la fois l'arbre primaire (2) et le pignon de marche arrière (10), la boîte comprenant encore un organe de commande (26) du passage d'un rapport de démultiplication à un autre, **caractérisée en ce que** la boîte de vitesses comprend un premier synchroniseur (18) apte à synchroniser sélectivement en rotation le pignon de marche arrière (10) et le troisième arbre (8), un capteur de mesure (28) d'une grandeur représentative de la vitesse de rotation de l'arbre primaire (2), une entrée (30) d'un paramètre représentatif de la vitesse de rotation de Marbre secondaire (4) et des moyens (32) de pilotage de la boîte de vitesses renseignés par le capteur de vitesse (28) et par l'entrée du paramètre représentatif (30) et recevant des ordres de l'organe de commande (26) du passage de rapport, les moyens (32) de pilotage étant aptes à commander, en cas d'ordre de passage à un rapport de démultiplication plus élevé, la synchronisation du pignon de marche arrière (16) avec le troisième arbre (8) jusqu'à ce que le capteur (18) indique que le rapport de démultiplication plus élevé est atteint.

2. Boîte selon la revendication 1, **caractérisée en ce qu'**elle comprend un second synchroniseur (20) apte à synchroniser sélectivement avec l'arbre secondaire (4) un pignon, appartenant à une première paire, monté fou autour de l'arbre secondaire (4), les moyens de pilotage (32) étant aptes à commander, en cas d'ordre de passage à un rapport de démultiplication moins élevé, la synchronisation dudit pignon fou avec l'arbre secondaire (4) jusqu'à ce que le capteur (28) indique que le rapport de démultiplication moins élevé est atteint.

3. Boîte selon la revendication 2, **caractérisée en ce que** le rapport de démultiplication de la première paire est le rapport le plus bas de la boîte de vitesses.

4. Boîte selon la revendication 2 ou 3, **caractérisée en ce que** le second synchroniseur (20) est un synchroniseur double apte à synchroniser un autre pignon monté fou autour de l'arbre secondaire (4) et appartenant à une seconde paire.

5. Boite selon la revendication 4, **caractérisée en ce qu'**au moins une paire autre que les première et seconde paires comprend un pignon sélectivement lié à l'arbre primaire (2) ou à l'arbre secondaire (4) par un dispositif de crabotage (20,22) dépourvu de moyens de synchronisation.

6. Boîte selon la revendication 4 ou 5, **caractérisée en ce que** les paires autres que les première et seconde paires comprennent chacune un pignon sélectivement lié à l'arbre primaire (2) ou à l'arbre secondaire (4) par un dispositif de crabotage dépourvu de moyen de synchronisation.

7. Boîte selon l'une quelconque des revendications 2 à 6, **caractérisée en ce que** le pignon intermédiaire (12) est le pignon fou de la première paire.

8. Boîte selon l'une quelconque des revendications 2 à 7, **caractérisée en ce que** le capteur (28) est adapté pour mesurer la vitesse de rotation du pignon de marche arrière (10).

9. Boîte selon l'une quelconque des revendications 2 à 8, **caractérisée en ce que** la couronne intermédiaire (6) est une couronne de pont entraînant en rotation les roues du véhicule.

10. Procédé de changement de rapport de démultiplication pour une boîte selon l'une quelconque des revendications 2 à 9, **caractérisé en ce qu'**il comprend les étapes suivantes en cas de passage d'un rapport relativement moins élevé à un rapport relativement plus élevé :
1/ désaccouplement des arbres primaire (2) et secondaire (4);
2/ synchronisation du pignon de marche arrière (10) avec le troisième arbre (8) pour ralentir l'arbre primaire (2) jusqu'à ce que le rapport de démultiplication plus élevé soit atteint;
3/ accouplement des arbres primaire (2) et secondaire (4) par l'intermédiaire de la paire de pignons correspondant au rapport de démultiplication plus élevé.

11. Procédé selon la revendication 10, **caractérisé en ce qu'**il comprend les étapes suivantes en cas de passage d'un rapport relativement plus élevé à un rapport relativement moins élevé :
1/ désaccouplement des arbres primaire (2) et secondaire (4);
2/ synchronisation du pignon fou de la première paire avec l'arbre secondaire (4) pour accélérer l'arbre primaire (2) jusqu'à ce que le rapport de démultiplication moins élevé soit atteint;
3/ accouplement des arbres primaire (2) et secondaire (4) par l'intermédiaire de la seconde paire de pignons correspondant au rapport de démultiplication moins élevé.

12. Véhicule comprenant une boîte de vitesses selon l'une quelconque des revendications 1 à 9, et un capteur de vitesse longitudinale du véhicule relié à l'entrée (30) du paramètre représentatif de la vitesse de rotation de l'arbre secondaire (14) de la boîte de vitesses.
